(19) Europäisches Patentamt

European Patent Office

Office européen des brevets

(11) **EP 1 717 979 A1**

(12) **EUROPEAN PATENT APPLICATION**
published in accordance with Art. 158(3) EPC

(43) Date of publication:
02.11.2006 Bulletin 2006/44

(51) Int Cl.:
*H04J 11/00* (2006.01)   *H04J 1/00* (2006.01)

(21) Application number: 05726644.7

(22) Date of filing: 16.03.2005

(86) International application number:
PCT/JP2005/004669

(87) International publication number:
WO 2005/091538 (29.09.2005 Gazette 2005/39)

(84) Designated Contracting States:
AT BE BG CH CY CZ DE DK EE ES FI FR GB GR
HU IE IS IT LI LT LU MC NL PL PT RO SE SI SK TR

(30) Priority: 22.03.2004 JP 2004082906

(71) Applicant: MATSUSHITA ELECTRIC INDUSTRIAL
CO., LTD.
Osaka 571-8501 (JP)

(72) Inventor: UEDA, Shinji
Matsushita Electric Indust. Co., Ltd
Shiromi, Chuo-ku, Osaka 540-6319 (JP)

(74) Representative: Grünecker, Kinkeldey,
Stockmair & Schwanhäusser
Anwaltssozietät
Maximilianstrasse 58
80538 München (DE)

(54) **PEAK POWER SUPPRESSOR AND PEAK POWER SUPPRESSING METHOD**

(57)   A peak power suppressor for facilitating realization of a desired peak factor without increasing the device scale and without degrading the use efficiency of the storage area. A clipping section (102) suppresses the peak power of the transmission signal according to the clipping coefficient (a). A filter section (103) limits the frequency band of the transmission signal the peak power of which has been suppressed. A coefficient correction signal generating section (111) detects the instantaneous input power (Pin) of the transmission signal inputted into the clipping section (102) and the instantaneous output power (Pout) outputted from the filter section (103). The coefficient correction signal generating section (111) computes the variation (Δa) of the clipping coefficient (a) from the instantaneous input and output powers (Pin, Pout). A coefficient setting section (108) changes the clipping coefficient (a) according to the computed coefficient variation (Δa).

FIG.5

## Description

Technical Field

The present invention relates to a peak power suppressing apparatus and peak power suppressing method for suppressing peak power of, for example, a multicarrier signal.

Background Art

In recent years, as a communication scheme capable of realizing high-speed radio transmission, a multicarrier scheme which is resistant to multipaths and fading draws attention. According to the multicarrier scheme, transmission signals superimposed on a plurality of carriers are generally added on the time axis, and therefore high peak power may be generated. To suppress the high peak power of such a multicarrier signal, processing called clipping which places an upper limit on the power may be carried out.

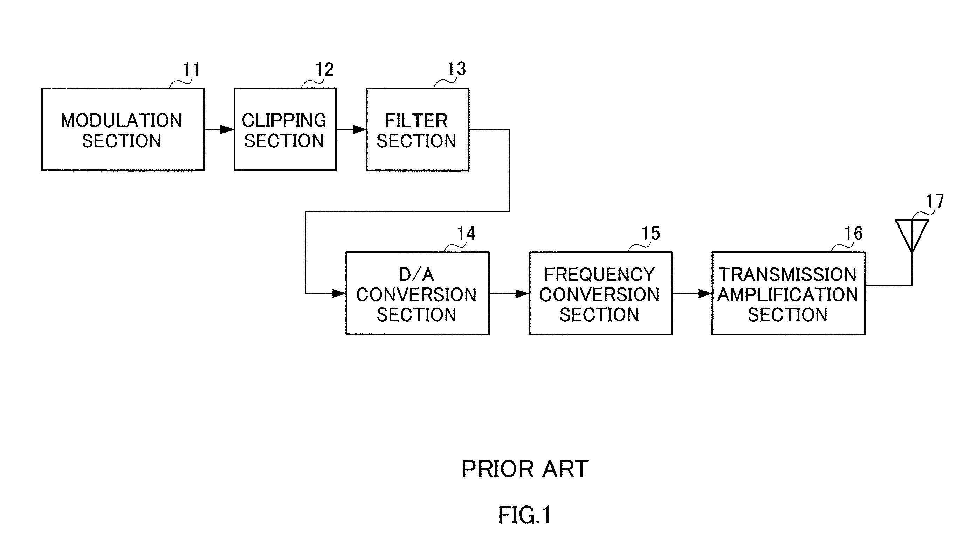

FIG. 1 is a block diagram showing an example of the configuration of a general peak power suppressing apparatus that carries out peak suppression with clipping. In the peakpower suppressing apparatus in FIG. 1, clipping section 12 performs clipping on a modulation signal generated by modulation section 11. Filter section 13 performs band limitation on the modulation signal subjected to clipping. The band-limited modulation signal is subjected to digital/analog conversion by digital/analog conversion section (D/A conversion section) 14, converted to a high-frequency signal by frequency conversion section 15, amplified by transmission amplification section 16 and transmitted by radio through antenna 17 (for example, see Non-Patent Document 1).

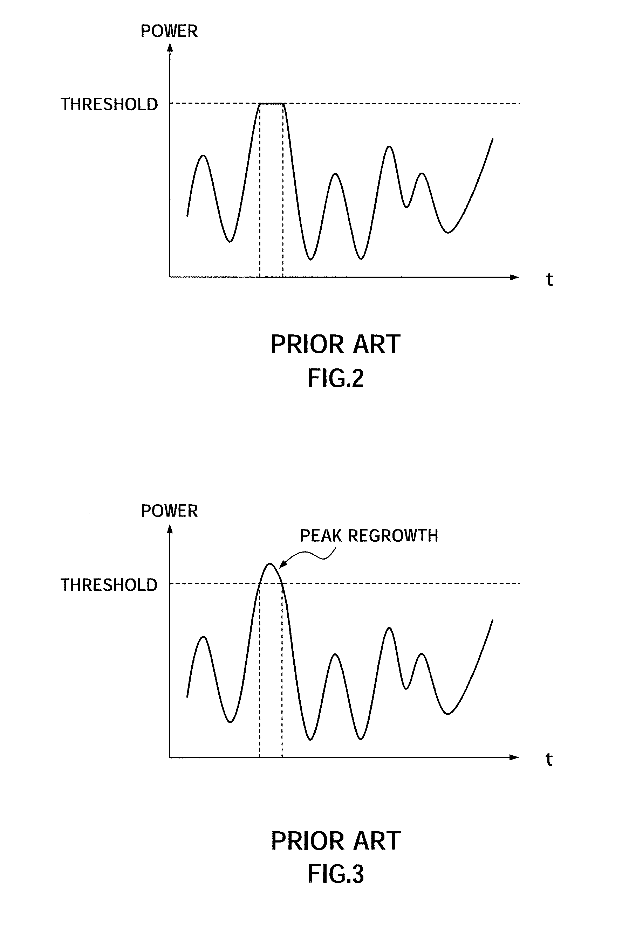

The above-described peak power suppressing apparatus limits peak power by performing clipping on the modulation signal (FIG. 2), and suppresses peak power while suppressing deterioration of a frequency spectrum by eliminating unnecessary out-of-band components generated by clipping through a filter. However, peak power exceeding an upper limit (threshold) of limited power can be re-generated as a result of the elimination of out-of-band components (FIG. 3).

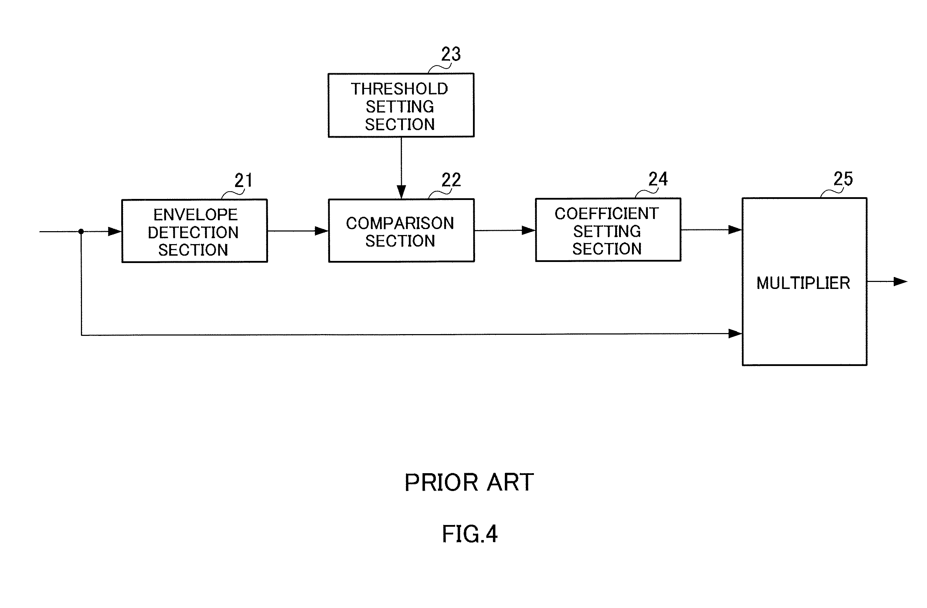

There is a conventional peak power suppressing apparatus, for example, described in Patent Document 1 aimed at reducing re-generated peak power and realizing a desired ratio of peakpower to average power (peak factor). FIG. 4 is a block diagram showing an example of the configuration of this peak power suppressing apparatus. In the peak power suppressing apparatus in FIG. 4, envelope detection section 21 detects an envelope of an input signal, comparison section 22 compares a plurality of thresholds preset and stored in threshold setting section 23 with the envelope, and multiplier 25 multiplies the input signal by a suppression coefficient that corresponds to each threshold and is stored in coefficient setting section 24. In this way, it is possible to control a peak factor and suppress unnecessary out-of-band radiation at the outputs of a filter and amplifier.

Patent Document 1: Unexamined Japanese Patent Publication No. 2003-298549 (p8, FIG. 8)
Non-Patent Document 1: "Effects of clipping and filtering on the performance of OFDM", Li, Xiaodong, IEEE Communications Letters, Vol.2, No.5, pp.131-133, May 1998

Disclosure of Invention

Problems to be Solved by the Invention

However, the conventional peak power suppressing apparatus has the following problems. That is, in the conventional peak power suppressing apparatus, it is necessary to store a list of suppression coefficients as a table in a unifiedway so that a signal to be transmitted has a desired power characteristic. For this reason, if power limitation is placed on a signal having a large difference between peak power and threshold power with high accuracy, the size of the table becomes enormous. When a storage area of the table increases in accordance with this, the scale of the apparatus increases. However, since there is a very low probability that power approximate to peak power may be generated as instantaneous power (for example, less than one hundred-thousandth to one millionth), even if such a table is stored, the utilization efficiency of the storage area is low.

Furthermore, the conventional peak power suppressing apparatus controls the peak factor with taken into consideration the input/output power characteristic in only the peak suppression processing stage. In other words, the conventional peak power suppressing apparatus does not control the peak factor with taken into consideration the input/output power characteristic in other processing stages. This results in an "insufficiently suppressed state" in which a maximum value of output power exceeds threshold power or an "excessively suppressed state" in which output power corresponding to input power exceeding the threshold power becomes smaller than the threshold power, and therefore it is not easy to realize a desired peak factor.

It is therefore an object of the present invention to provide a peak power suppressing apparatus and peak power suppressing method capable of easily realizing a desired peak factor without increasing the scale of the apparatus and reducing the utilization efficiency of the storage area.

Means for Solving the Problem

A peak power suppressing apparatus of the present invention has a suppression section that suppresses peak power of a transmission signal based on a predetermined suppression coefficient, a limiting section that limits a band of the transmission signal in which the peak power has been suppressed by the suppression section, a detection section that detects input power of the transmission signal inputted to the suppression section and output power of the transmission signal outputted from the limiting section respectively, a calculation section that calculates the amount of change of the suppression coefficient based on the detected input power and output power, and a change section that changes the suppression coefficient based on the calculated amount of change.

A peak power suppressing method of the present invention has a suppression step of suppressing peak power of a transmission signal based on a predetermined suppression coefficient, a limiting step of limiting a band of the transmission signal in which the peak power has been suppressed in the suppression step, a detection step of detecting input power of the transmission signal before the peak power is suppressed in the suppression step and output power of the transmission signal after the band is limited in the limiting step respectively, a calculation step of calculating the amount of change of the suppression coefficient based on the input power and output power detected in the detection step and a changing step of changing the suppression coefficient based on the amount of change calculated in the calculation step.

Advantageous Effect of the Invention

According to the present invention, it is possible to realize a desired peak factor without increasing the scale of the apparatus and reducing the utilization efficiency of a storage area.

Brief Description of Drawings

FIG. 1 is a block diagram showing an example of the configuration of a conventional peak power suppressing apparatus;

FIG. 2 illustrates an example of an output waveform of a clipping section at the conventional peak power suppressing apparatus;

FIG. 3 illustrates an example of an output waveform of a filter section at the conventional peak power suppressing apparatus;

FIG. 4 is a block diagram showing another example of the configuration of the conventional peak power suppressing apparatus;

FIG. 5 is a block diagram showing the configuration of a radio transmission apparatus according to Embodiment 1 of the present invention;

FIG. 6 is a block diagram of the modulation section of the radio transmission apparatus according to Embodiment 1 of the present invention;

FIG. 7 is a block diagram showing the configuration of the clipping section of the radio transmission apparatus according to Embodiment 1 of the present invention;

FIG. 8 is a block diagram showing the configuration of the coefficient correction signal generation section of the radio transmission apparatus according to Embodiment 1 of the present invention;

FIG. 9 is a block diagram showing the configuration of the coefficient correction control section of the radio transmission apparatus according to Embodiment 1 of the present invention;

FIG. 10 is a block diagram showing the configuration of the coefficient setting section of the radio transmission apparatus according to Embodiment 1 of the present invention;

FIG. 11A illustrates an input/output power characteristic corresponding to the clipping section when a clipping coefficient in an initial state is used;

FIG. 11B illustrates an input/output power characteristic corresponding to a combination of the clipping section and filter section when a clipping coefficient in an initial state is used;

FIG. 12A illustrates an input/output power characteristic corresponding to the clipping section when an optimum clipping coefficient is used;

FIG. 12B illustrates an input/output power characteristic corresponding to a combination of the clipping section and filter section when an optimum clipping coefficient is used;

FIG. 13 illustrates the input/output power characteristic corresponding to a combination of the clipping section and filter section when an insufficiently suppressed state is generated;

FIG. 14 illustrates the input/output power characteristic corresponding to a combination of the clipping section and filter section when an excessively suppressed state is generated;

FIG. 15 illustrates an input waveform of an OFDM signal inputted to the clipping section in Embodiment 1 of the present invention;

FIG. 16 illustrates an output waveform of an OFDM signal outputted from the clipping section in Embodiment 1 of the present invention;

FIG. 17 illustrates an output waveform of an OFDM signal outputted from the filter section in Embodiment 1 of the present invention;

FIG. 18 is a block diagram showing the configuration of a coefficient correction signal generation section in a radio transmission apparatus according to Embodiment 2 of the present invention;

FIG. 19 is a block diagram showing the configuration of a modulation section of a radio transmission apparatus according to Embodiment 3 of the present invention;

FIG. 20 is a block diagram showing the configuration of a modulation section of a radio transmission apparatus according to Embodiment 4 of the present invention; and

FIG. 21 is a flow chart illustrating the clipping operation of a radio transmission apparatus according to Embodiment 5 of the present invention.

Best Mode for Carrying Out the Invention

Embodiments of the present invention will be explained below in detail with reference to the accompanying drawings.

(Embodiment 1)

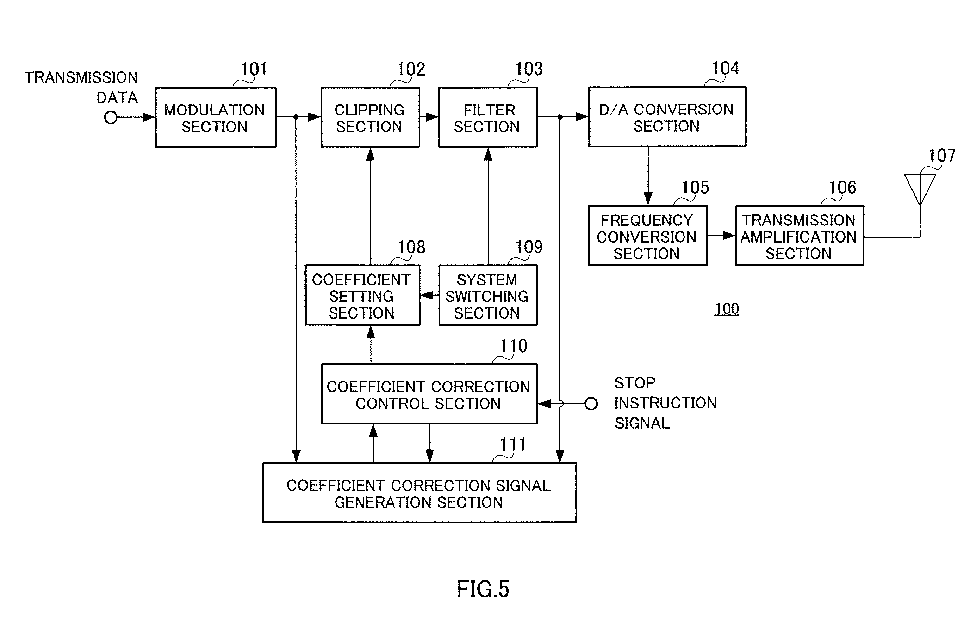

FIG. 5 is a block diagram showing the configuration of a radio transmission apparatus to which a peak power suppressing apparatus according to Embodiment 1 of the present invention is applied.

Radio transmission apparatus 100 in FIG. 5 is provided with modulation section 101 that modulates transmission data, clipping section 102 that performs clipping on the modulation signal based on a clipping coefficient, filter section 103 that has a plurality of switchable input/output power characteristics and limits the band of the clipped modulation signal, D/A conversion section 104 that converts the band limited modulation signal from digital to analog, frequency conversion section 105 that converts the digital/analog converted modulation signal to a high-frequency signal, transmission amplification section 106 that amplifies the frequency converted modulation signal, coefficient setting section 108 that sets and changes a clipping coefficient used for clipping at clipping section 102, system switching section 109 that performs control based on the switching of the system (combination of modulation section 101 and filter section 103 in this embodiment), coefficient correction control section 110 that controls the execution and stop of correction of the clipping coefficient, and coefficient correction signal generation section 111 that detects input power of the modulation signal inputted to clipping section 102 and output power of the modulation signal outputted from filter section 103 and calculates the amount of correction of the clipping coefficient.

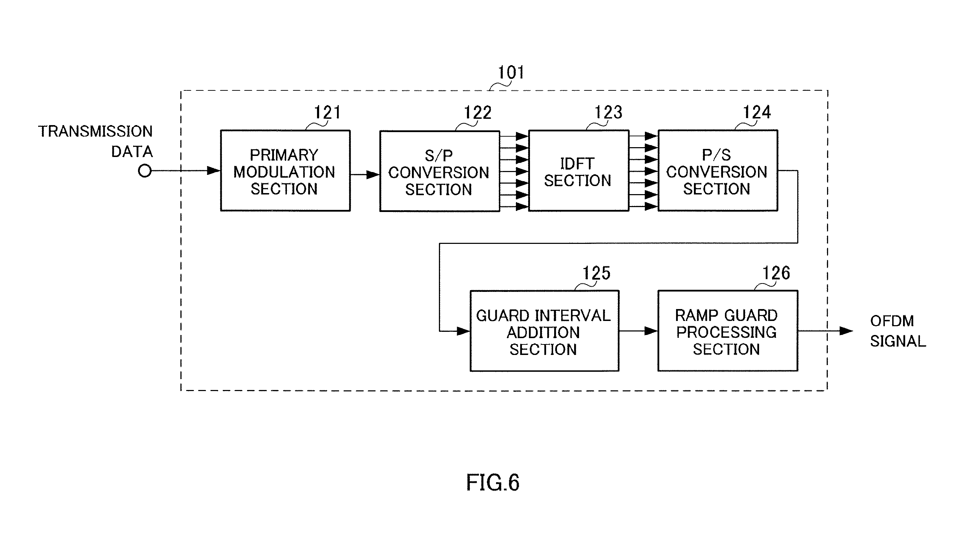

Furthermore, FIG. 6 is a block diagram showing the internal configuration of modulation section 101. Modulation section 101 is provided with primary modulation section 121 that has a plurality of switchable modulation schemes, that is, a plurality of switchable input/output power characteristics and performs primary modulation on transmission data, serial/parallel conversion section (S/P conversion section) 122 that converts the modulation signal obtained through primary modulation from serial to parallel, inverse discrete Fourier transform section (IDFT section) 123 that performs an inverse discrete Fourier transform on the serial/parallel converted modulation signal, parallel/serial conversion section (P/S conversion section) 124 that converts the modulation signal subjected to the inverse discrete Fourier transform from parallel to serial, guard interval addition section 125 that adds a guard interval to the parallel/serial converted modulation signal, and ramp guard processing section 126 that performs predetermined ramp guard processing on the guard interval added to the modulation signal. That is, modulation section 101 of this embodiment generates an OFDM (Orthogonal Frequency Division Multiplex) signal.

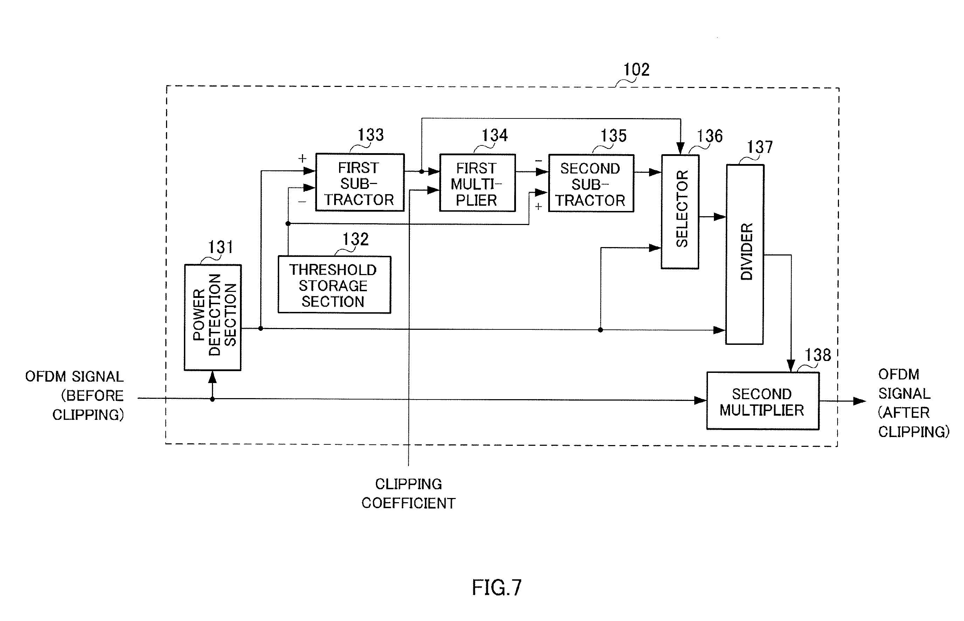

Furthermore, FIG. 7 is a block diagram showing the internal configuration of clipping section 102. Clipping section 102 is provided with power detection section 131 that detects input power of an OFDM signal inputted from modulation section 101, threshold storage section 132 that stores a predetermined threshold, first subtractor 133 that subtracts the threshold stored in threshold storage section 132 from the value of the input power detected by power detection section 131, first multiplier 134 that calculates the product of the subtraction result of first subtractor 133 and the clipping coefficient inputted from coefficient setting section 108, second subtractor 135 that subtracts the multiplication result of first multiplier 134 from the threshold stored in threshold storage section 132, selector 136 that selects and outputs one of the input power detected by power detection section 131 and the subtraction result of second subtractor 135 according to whether the subtraction result of first subtractor 133 is positive or negative (whether or not it is zero or greater in this embodiment), divider 137 that divides the output of selector 136 by the input power detected by power detection section 131, and second multiplier 138 that multiplies the OFDM signal inputted from modulation section 101 by a weight which is the division result of divider 137.

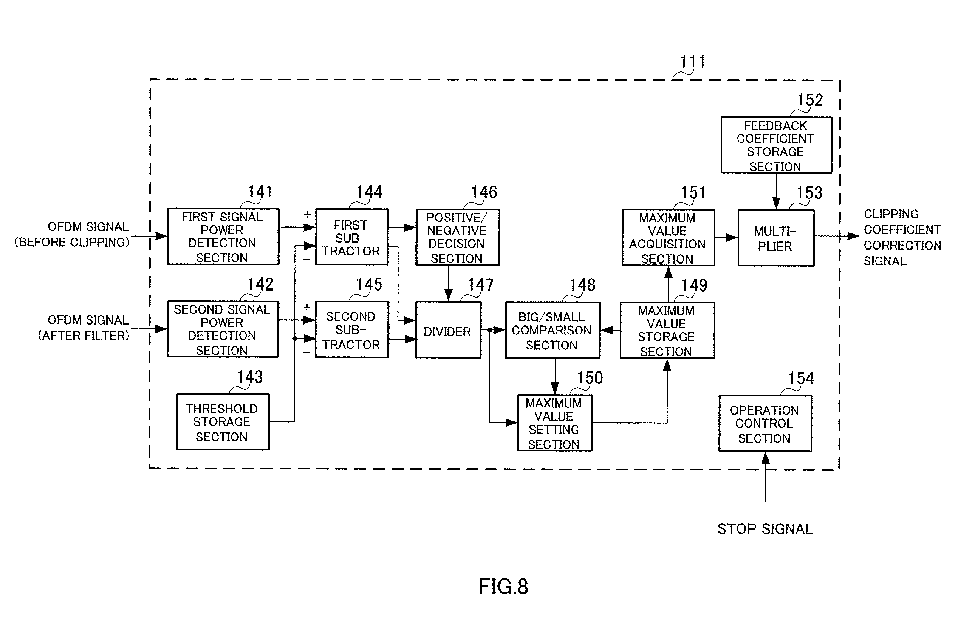

Furthermore, FIG. 8 is a block diagram showing the internal configuration of coefficient correction signal generation section 111. Coefficient correction signal generation section 111 is provided with first signal power detection section 141 that detects input power of the OFDM signal inputted from modulation section 101, second signal power detection section 142 that corresponds to the OFDM signal and detects output power of the OFDM signal outputted from filter section 103, threshold storage section 143 that stores a predetermined threshold, first subtractor 144 that subtracts the threshold stored in threshold storage section 143 from the input power detected by first signal power detection section 141, second subtractor 145 that subtracts the threshold stored in threshold storage section 143 from the output power detected by second signal power detection section 142, positive/negative decision section 146 that decides whether the subtraction result of first subtractor 144 is positive or negative (whether or not it is greater than zero in this embodiment), divider 147 that divides the subtraction result of second subtractor 145 by the subtraction result of first subtractor 144 when the subtraction result of first subtractor 144 is positive, big/small comparison section 148 that compares the division result of divider 147 with a maximum value stored in maximum value storage section 149, maximum value storage section 149 that stores the maximum value, maximum value setting section 150 that updates the maximum value with the division result when the division result of divider 147 is greater than the maximum value stored in maximum value storage section 149 and sets the maximum value, maximum value acquisition section 151 that acquires the maximum value stored in maximum value storage section 149 at predetermined time intervals, feedback coefficient storage section 152 that stores a predetermined feedback coefficient, multiplier 153 that multiplies the maximum value acquired by maximum value acquisition section 151 by the feedback coefficient and outputs a clipping coefficient correction signal indicating this multiplication result to coefficient correction control section 110, and operation control section 154 that receives a stop signal inputted from coefficient correction control section 110, stops the operation of generating a clipping coefficient correction signal when the stop signal is received or executes the operation of generating a clipping coefficient correction signal when the stop signal is not received.

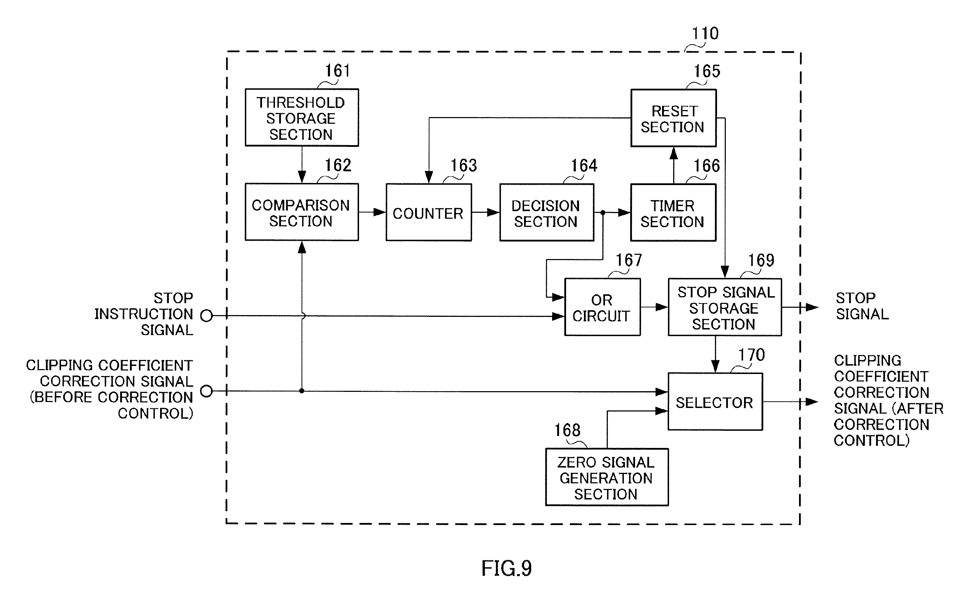

Furthermore, FIG. 9 is a block diagram showing the internal configuration of coefficient correction control section 110. Coefficient correction control section 110 is provided with threshold storage section 161 that stores a predetermined threshold, comparison section 162 that compares the clipping coefficient correction signal inputted from coefficient correction signal generation section 111 with the threshold stored in threshold storage section 161, counter 163 that counts the number of times the comparison result that the value indicated by the inputted clipping coefficient correction signal is smaller than the threshold is obtained and outputs a total value, decision section 164 that decides whether or not the output of counter 163 has exceeded a predetermined threshold and continuously outputs "1" when the output exceeds the threshold and "0" otherwise, timer section 166 that measures the time length during which the output value of decision section 164 continues to be "1" and outputs "1" when the measured time length becomes a specified length or always outputs "0" otherwise, OR circuit 167 that outputs a logical sum of a stop instruction signal inputted from outside (indicating "1" or "0") and the output of decision section 164, reset section 165 that resets to "0" the value stored in counter 163 and stop signal storage section 169 when the output of timer section 166 becomes "1", stop signal storage section 169 that stores the output of OR circuit 167 and outputs it to coefficient correction signal generation section 111 as a stop signal (indicating "1" or "0"), zero signal generation section 168 that generates and outputs a zero signal, and selector 170 that selects the output of zero signal generation section 168 as a clipping coefficient correction signal when the output of stop signal storage section 169 is "1" or selects the clipping coefficient correction signal from coefficient correction signal generation section 111 when the output of stop signal storage section 169 is "0" and outputs the selected signal to coefficient setting section 108.

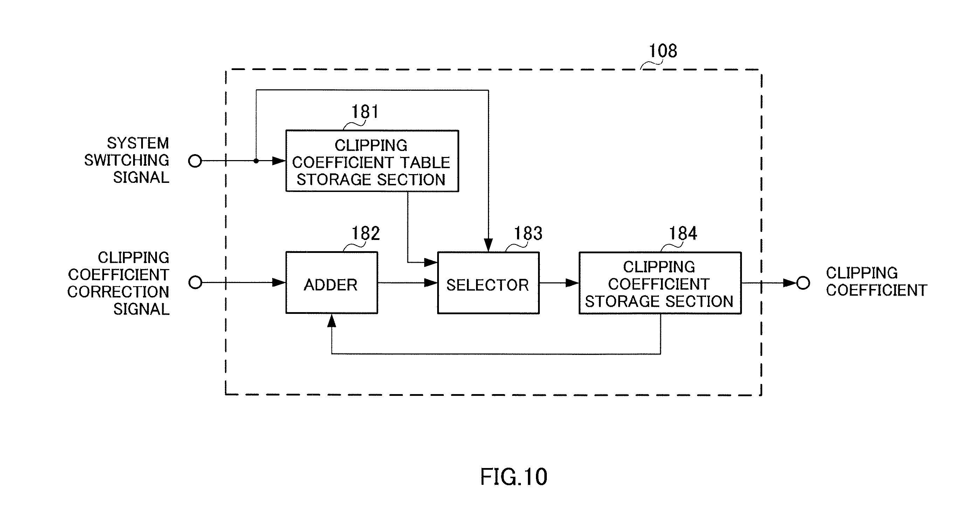

Furthermore, FIG. 10 is a block diagram showing the internal configuration of coefficient setting section 108. Coefficient setting section 108 is provided with clipping coefficient table storage section 181 that stores a list of clipping coefficients (initial values) calculated beforehand for combinations of individual modulation schemes of modulation section 101 and individual input/output power characteristics of filter section 103 as a table, reads and outputs a clipping coefficient corresponding to a system switching signal inputted from system switching section 109 from the table, adder 182 that calculates and outputs the sum of the value stored in clipping coefficient storage section 184 and the value indicated by the clipping coefficient correction signal inputted from coefficient correction control section 110, selector 183 that selects the output of clipping coefficient table storage section 181 when a system switching signal is inputted from system switching section 109 or selects the output of adder 182 otherwise, and clipping coefficient storage section 184 that substitutes the selected value of selector 183 for the original value, stores the selected value, thereby updates the clipping coefficient and outputs the selected value to clipping section 102 as a clipping coefficient.

Next, the operation of radio transmission apparatus 100 in the above-described configuration will be explained.

First, the correction operation on a clipping coefficient will be explained.

First, modulation section 101 generates an OFDM signal and inputs the signal to clipping section 102. At this time, first signal power detection section 141 of coefficient correction signal generation section 111 detects power of the OFDM signal when it is inputted (hereinafter referred to as "instantaneous input power Pin").

On the other hand, power detection section 131 of clipping section 102 at this time detects power of the OFDM signal when it is inputted (hereinafter referred to as "instantaneous input power P"). Instantaneous input power P and instantaneous input power Pin are substantially the same value. First subtractor 133 calculates difference P-Pth between detected instantaneous input power P and threshold Pth stored in threshold storage section 132. First multiplier 134 calculates the product of clipping coefficient a given from clipping coefficient storage section 184 in coefficient setting section 108 and difference P-Pth (hereinafter referred to as "amount of power correction $\Delta p$") according to (Equation 1) below.

$$\Delta p = a \times (P - Pth) \cdots (Equation\ 1)$$

Second subtractor 135 calculates correction power P' by subtracting amount of power correction $\Delta p$ from threshold Pth using (Equation 2) below.

$$P' = Pth - \Delta p \cdots (Equation\ 2)$$

Selector 136 selects and outputs P' when difference P-Pth $\geqq$ 0, and P when difference P-Pth<0. Divider 137 calculates a weight by dividing the output of selector 136 by instantaneous input power P. Second multiplier 138 multiplies the OFDM signal inputted from modulation section 101 by the calculated weight. The OFDM signal which is the multiplication result of second multiplier 138 is outputted to filter section 103. In this way, it is possible to obtain an effect equivalent to that obtained by clipping the power of the OFDM signal with the output value of selector 136.

Filter section 103 limits the band of the OFDM signal inputted from clipping section 102 and thereby eliminates unnecessary out-of-band components generated during the clipping at clipping section 102. The band-limited OFDM signal is then outputted to D/A conversion section 104. At this time, second signal power detection section 142 of coefficient correction signal generation section 111 detects power of the OFDM signal when it is outputted (hereinafter referred to as "instantaneous output power Pout").

In coefficient correction signal generation section 111, instantaneous input power Pin detected at first signal power detection section 141 is inputted to first subtractor 144 and instantaneous output power Pout detected at second signal power detection section 142 is inputted to second subtractor 145. First subtractor 144 calculates difference $\Delta Pin$ between instantaneous input power Pin and threshold Pth stored in threshold storage section 143 using (Equation 3) below. On the other hand, second subtractor 145 calculates difference $\Delta Pout$ between instantaneous output power Pout and threshold value Pth using (Equation 4) below.

$$\Delta Pin = Pin - Pth \cdots (Equation\ 3)$$

$$\Delta Pout = Pout - Pth \cdots (Equation\ 4)$$

Positive/negative decision section 146 decides whether or not $\Delta Pin$ is a positive value. When it is decided positive, positive/negative decision section 146 makes divider 147 operate. Divider 147 divides the subtraction result of second subtractor 145 by the subtraction result of first subtractor 144 using (Equation 5) below. In this way, an insufficiently suppressed state and excessively suppressed state at clipping section 102 are detected. That is, the detected insufficiently suppressed state and excessively suppressed state are expressed as inclination components (hereinafter referred to as "inclination x") in the input/output power characteristic corresponding to the combination of clipping section 102 and filter section 103. Therefore, when the amount of correction corresponding to inclination x is calculated, it is possible to calculate clipping coefficient a such that these states are canceled.

$$x = \Delta Pout / \Delta Pin \cdots (Equation \ 5)$$

Big/small comparison section 148 then compares the value stored in maximum value storage section 149 with inclination x. When the comparison result shows that inclination x is greater, maximum value setting section 150 updates the value stored in maximum value storage section 149 to inclination x. By continuing such processing for a predetermined period, it is possible to obtain maximum value y of inclination x within the predetermined period. Maximum value acquisition section 151 extracts maximum value y stored in maximum value storage section 149 at predetermined time intervals. Extracted maximum value y is multiplied at multiplier 153 by predetermined feedback coefficient m stored in feedback coefficient storage section 152 according to (Equation 6) below. This multiplication result is the amount of correction of clipping coefficient a (hereinafter referred to as "amount of coefficient correction $\Delta a$") and the clipping coefficient correction signal indicating amount of coefficient correction $\Delta a$ is outputted to coefficient correction control section 110.

$$\Delta a = m \times y \cdots (Equation \ 6)$$

Coefficient correction control section 110 performs coefficient correction control which will be described later on the clipping coefficient correction signal inputted from coefficient correction signal generation section 111 and outputs the clipping coefficient correction signal subjected to coefficient correction control to coefficient setting section 108.

In coefficient setting section 108, adder 182 adds amount of coefficient correction $\Delta a$ indicated by the clipping coefficient correction signal inputted from coefficient correction control section 110 to clipping coefficient a stored in clipping coefficient storage section 184 according to (Equation 7) below to obtain new clipping coefficient a. When no system switching signal is inputted from system switching section 109, selector 183 selects clipping coefficient a as the addition result and outputs it to clipping coefficient storage section 184. When clipping coefficient a is inputted from selector 183, clipping coefficient storage section 184 updates clipping coefficient a stored so far with newly inputted clipping coefficient a and stores the inputted clipping coefficient a. At this time, clipping coefficient a inputted to clipping coefficient storage section 184 is outputted to first multiplier 134 of clipping section 102 as an appropriate coefficient obtained through the coefficient correction operation.

$$a + \Delta a = a \cdots (Equation \ 7)$$

By carrying out update processing on clipping coefficient a, it is possible to simplify correction processing on clipping coefficient a which is repeatedly carried out, reduce the overall load of radio transmission apparatus 100 and correct clipping coefficient a with good response to changes over time of the input/output power characteristic corresponding to the combination of clipping section 102 and filter section 103.

When a system switching signal is inputted from system switching section 109, clipping coefficient a corresponding to the information indicated by the system switching signal is inputted from clipping coefficient table storage section 181 to selector 183. In this case, selector 183 selects clipping coefficient a inputted from clipping coefficient table storage section 181 and outputs it to clipping coefficient storage section 184.

For example, when the modulation scheme in modulation section 101 is changed, the input/output power characteristic is switched accordingly. At this time, clipping coefficient a corresponding to the switched input/output power characteristic is selected. Thus, it is possible to correct clipping coefficient a with good response to switching of the input/output power characteristic due to the change in the modulation scheme. Furthermore, when, for example, the input/output power characteristic of filter section 103 is switched, clipping coefficient a corresponding to the switched input/output power characteristic is also selected. Thus, it is possible to correct clipping coefficient a with good response to switching of the input/output power characteristic of filter section 103.

By the above-described coefficient correction, the clipping coefficient is optimized and appropriate clipping is performed. This will be more clearly understandable when explained using the input/output power characteristic diagram of the OFDM signal. Hereinafter, a case where a clipping coefficient is corrected from an initial value (a=0) to an optimum value will be explained.

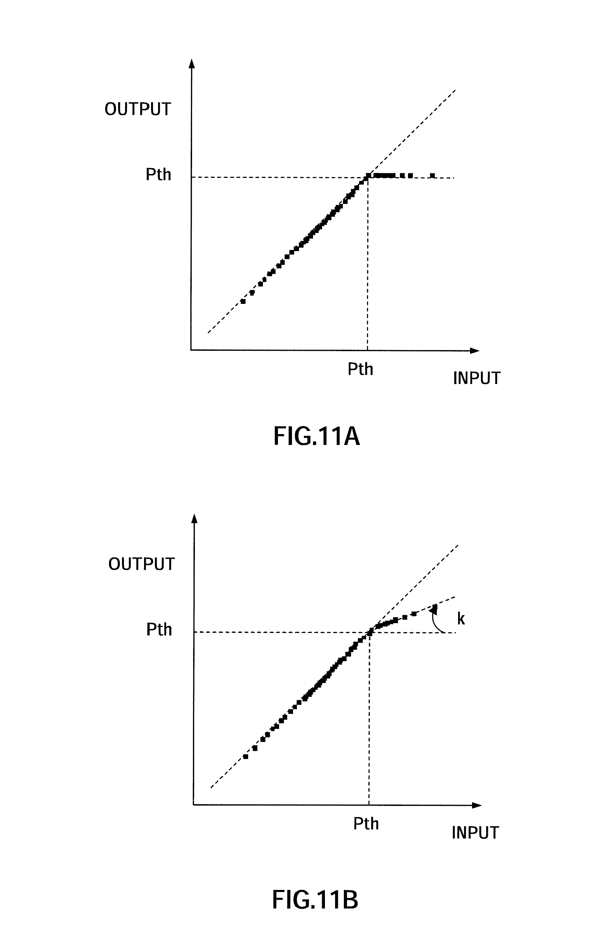

When clipping coefficient a is an initial state, that is, 0, clipping section 102 performs power limitation at a fixed clipping level (threshold Pth), and therefore in the input/output power characteristic corresponding to clipping section 102, correction power P' of the OFDM signal outputted to filter section 103 when instantaneous input power P exceeds threshold Pth is constant at Pth (FIG. 11A).

At this time, in the input/output power characteristic corresponding to the combination of clipping section 102 and filter section 103, an inclination component (here, referred to as "inclination k") is generated in an area where instantaneous input power P exceeds threshold Pth as shown in FIG. 11B. This inclination k expresses the power component re-generated by filter section (part or whole of the power component suppressed by clipping section 102).

To deal with this, coefficient correction signal generation section 111 detects inclination k, and thereby calculates amount of coefficient correction $\Delta a$ so as to cancel this and coefficient setting section 108 calculates next clipping coefficient a (=0+$\Delta a$). Optimum clipping coefficient a is calculated by repeating correction of clipping coefficient a in this way.

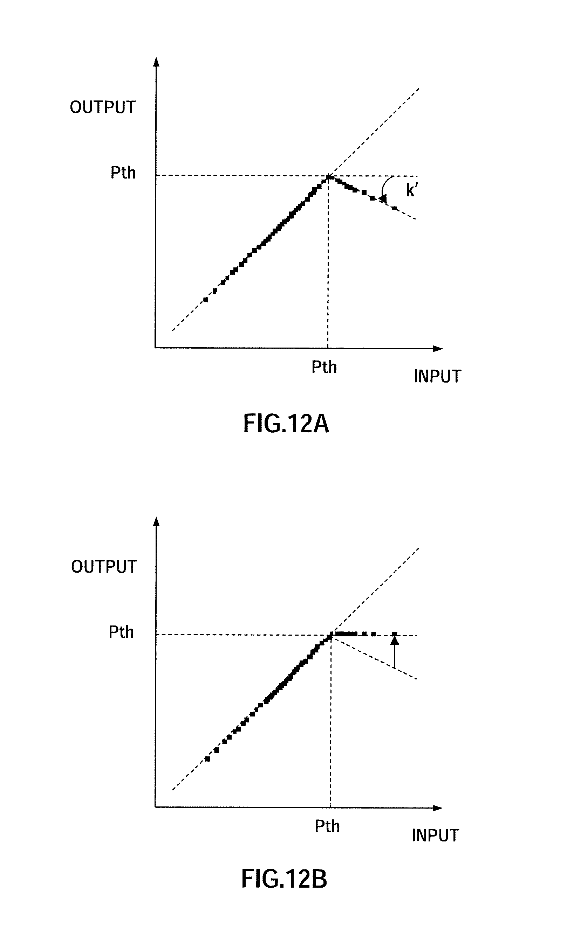

When optimum clipping coefficient a is calculated, the input/output power characteristic before and after clipping section 102 has a component having an inclination in a direction opposite to inclination k (hereinafter referred to as "inclination k'") in an area where instantaneous input power P exceeds threshold value Pth as shown in FIG. 12A.

With regard to this inclination k', it is preferable that k'=-k. In this case, even when the power component is re-generated at filter section 103 as a result of filtering processing, k+k'=0, and therefore in the input/output power characteristic corresponding to the combination of clipping section 102 and filter section 103, instantaneous output power Pout has a level equivalent to threshold Pth in an area where instantaneous input power P exceeds threshold Pth (FIG. 12B).

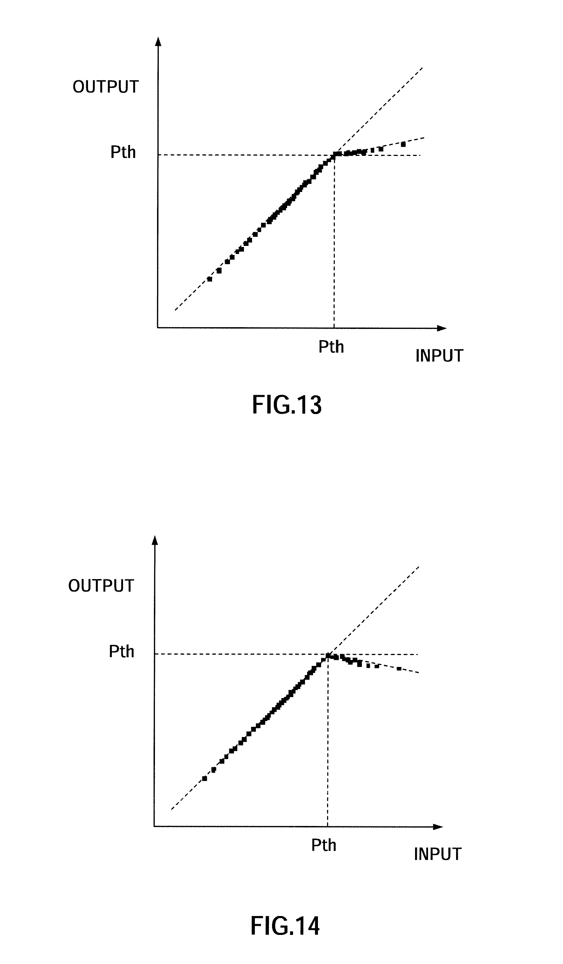

Furthermore, with regard to inclination k, there is a case where generated inclination k has a positive value and a case where it has a negative value. As shown in FIG. 13, inclination k having a positive value indicates that the current value of clipping coefficient a is smaller than an optimum value, that is, the amount of suppression is insufficient. Furthermore, the absolute value of inclination k expresses the degree of the insufficiently suppressed state and is proportional to the difference between the current value and optimum value (corresponding to a shortfall of the coefficient). On the other hand, as shown in FIG. 14, inclination k having a negative value indicates that the current value of clipping coefficient a is greater than an optimum value, that is, the amount of suppression is excessive. Furthermore, the absolute value of inclination k expresses the degree of the excessive suppression state and is proportional to divergence between the current value and optimum value (corresponding to an excess of the coefficient).

Therefore, clipping coefficient a is approximated to an optimum value by carrying out the above-described coefficient correction. In this embodiment, amount of coefficient correction $\Delta a$ is calculated by multiplying the maximum value of detected inclination k by predetermined feedback coefficient m. That is, feedback coefficient m is set to a value so as to make clipping coefficient a approximate to the optimum value from detected inclination k.

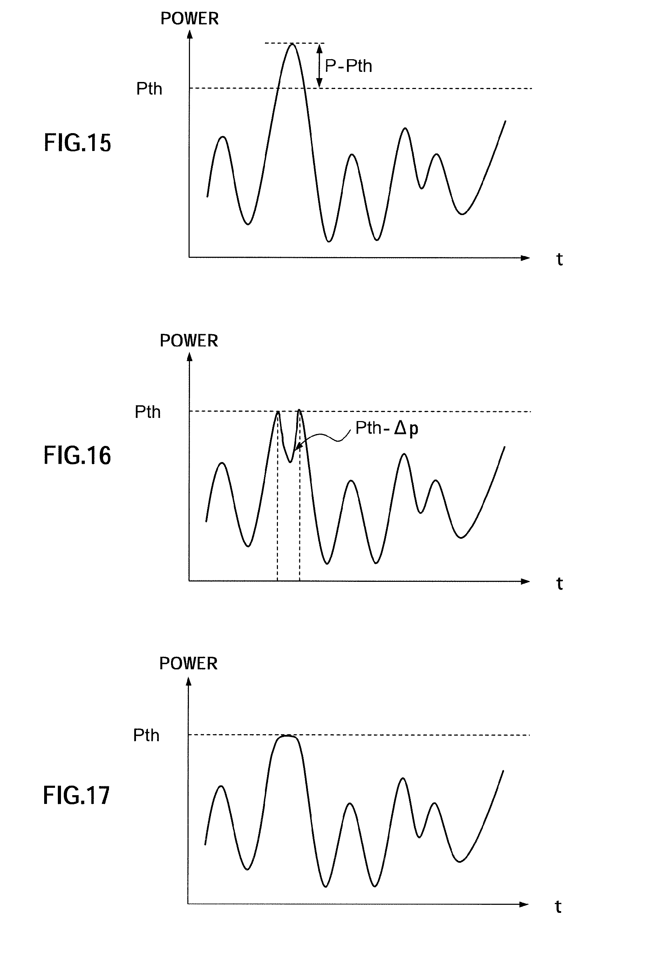

Next, a waveform variation of the OFDM signal when clipping coefficient a is optimized and appropriate clipping is performed will be explained. Suppose the OFDM signal generated by modulation section 101 partially has an instantaneous input power P which exceeds threshold Pth (peak power) on the time axis as shown in FIG. 15. At this time, clipping section 102 performs clipping on the portion exceeding threshold Pth on the time axis (in other words, time at which instantaneous input power P exceeds threshold Pth). As a result of this clipping, as shown in FIG. 16, this portion has power of Pth-$\Delta p$ (that is, power smaller than threshold Pth). The OFDM signal after clipping is subjected to band limitation. The amount of power correction $\Delta p$ takes into consideration the magnitude of the power component re-generated at filter section 103. Therefore, even when the power component is re-generated as a result of the filtering processing at filter section 103, instantaneous output power Pout of the portion exceeding threshold Pth finally becomes substantially equal to threshold Pth (FIG. 17).

Next, coefficient correction control at coefficient correction control section 110 will be explained.

First, the clipping coefficient correction signal generated at coefficient correction signal generation section 111 is inputted to comparison section 162 and selector 170. Comparison section 162 compares amount of coefficient correction $\Delta a$ indicated in the clipping coefficient correction signal with threshold ath stored in threshold storage section 161. As a result of the comparison, "1" is outputted when $\Delta a$<ath, and "0" is outputted when $\Delta a \geqq$ ath. Counter 163 counts the output value of comparison section 162 and outputs the total value.

Decision section 164 decides whether or not the output of counter 163 has exceeded a specified threshold. When the decision result shows that the output of counter 163 has exceeded the specified threshold, the duration time is measured at timer section 166. When the measured duration time reaches a specified time, that information is reported to stop signal storage section 169 through OR circuit 167 and is also reported to selector 170. In this case, selector 170 selects a zero signal from zero signal generation section 168 instead of the inputted clipping coefficient correction signal and outputs this to coefficient setting section 108 as a clipping coefficient correction signal. That is, when amount of coefficient correction $\Delta a$ stably keeps a low level state over a specified time, the value of amount of coefficient correction $\Delta a$ is set to 0. By this means, clipping coefficient a is not corrected. Therefore, when clipping coefficient a is stable with high accuracy, it is possible to stop the correction processing on clipping coefficient a and suppress overall power consumption of radio transmission apparatus 100.

When a stop instruction signal is inputted from outside, the information is reported to stop signal storage section 169 through OR circuit 167 and also reported to selector 170. The subsequent operations are the same as those described above.

Furthermore, when the above-described report from OR circuit 167 to stop signal storage section 169 is generated, stop signal storage section 169 outputs the stop signal to coefficient correction signal generation section 111. The stop signal is a signal for stopping a clipping coefficient correction signal generation operation of coefficient correction signal generation section 111. The stop signal is received by operation control section 154 of coefficient correction signal generation section 111 and at this time, operation control section 154 stops the above-described clipping coefficient correction signal generation operation. In this way, it is possible to stop calculation of amount of change in coefficient $\Delta a$ at a desired timing and consequently stop the correction processing on clipping coefficient a and suppress overall power consumption of radio transmission apparatus 100.

On the other hand, when the above-described report from OR circuit 167 to stop signal storage section 169 is not generated, amount of coefficient correction $\Delta a$ is recognized to be unstable in a low level state. Therefore, the stop signal is not outputted by stop signal storage section 169 and the clipping coefficient correction signal generation operation is executed at coefficient correction signal generation section 111. Furthermore, selector 170 of coefficient correction control section 110 outputs the clipping coefficient correction signal inputted from coefficient correction signal generation section 111 to coefficient setting section 108 as is.

As shown above, according to this embodiment, amount of coefficient correction $\Delta a$ of clipping coefficient a is calculated based on instantaneous input power P (Pin) and instantaneous output power Pout, and therefore the enormous table for suppression coefficients is not needed, and it is possible to perform peak factor control with taken into consideration the input/output power characteristic corresponding to the combination of clipping section 102 and filter section 103, and use clipping coefficient a based on instantaneous input power P (Pin) and instantaneous output power Pout which are instantaneous actual measurement values and thereby easily realize a desired peak factor without increasing the scale of the apparatus and reducing the utilization efficiency of the storage area.

With regard to a calculation of a power difference, dB may be used as the unit or calculations using linear value may also be carried out.

Furthermore, transmission data to be processed may be a simple symbol string or code division multiple access (CDMA) signal.

(Embodiment 2)

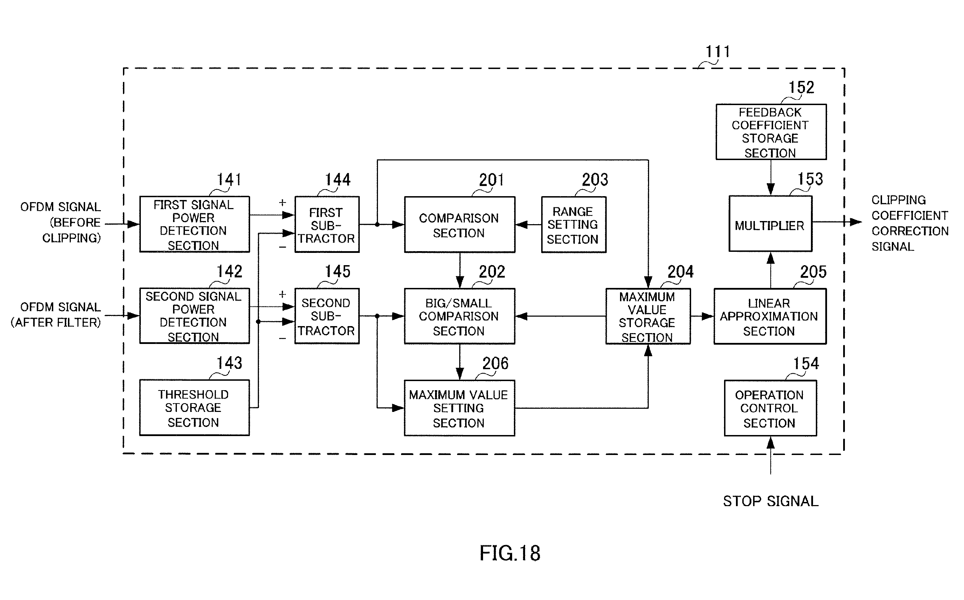

FIG. 18 is a block diagram showing the configuration of a coefficient correction signal generation section in a radio transmission apparatus according to Embodiment 2 of the present invention. The radio transmission apparatus explained in this embodiment has the same basic configuration as that of the radio transmission apparatus in FIG. 5 explained in Embodiment 1. Furthermore, the coefficient correction signal generation section of this embodiment also has a basic configuration similar to that explained in Embodiment 1. Therefore, the same components as or components corresponding to those explained in Embodiment 1 are assigned the same reference numerals without further explanations.

Coefficient correction signal generation section 111 in FIG. 18 is provided with first signal power detection section 141, second signal power detection section 142, threshold storage section 143, first subtractor 144, second subtractor 145, feedback coefficient storage section 152, multiplier 153 and operation control section 154 explained in Embodiment 1. In addition to these components, coefficient correction signal generation section 111 is also provided with range setting section 203 that stores a preset power range, comparison section 201 that compares a subtraction result of first subtractor 144 with the power range and thereby decides whether or not the subtraction result falls within the power range, big/small comparison section 202 that compares a value corresponding to the subtraction result of first subtractor 144 out of values stored in maximum value storage section 204 with the subtraction result of second subtractor 145, maximum value setting section 206 that updates the value of maximum value storage section 204 corresponding to the subtraction result of first subtractor 144 when the comparison result from big/small comparison section 202 shows that the subtraction result of second subtractor 145 is greater, maximum value storage section 204 that stores a maximum value of the subtraction result of second subtractor 145 in association with the subtraction result of first subtractor 144 as a table, and linear approximation section 205 that performs linear approximation on the values stored in maximum value storage section 204 at predetermined time intervals.

Next, the clipping coefficient correction signal generation operation at coefficient correction signal generation section 111 in the above-described configuration will be explained.

The power range stored in range setting section 203 is preset to such a value that it is possible to decide whether or not instantaneous input power Pin has a value which has relatively high frequency of appearance. In this case, when instantaneous input power Pin has a value which has relatively high frequency of appearance, difference $\Delta Pin$ which is the subtraction result of first subtractor 144 belongs to its power range. By this means, it is possible to target only the power range having a relatively high frequency of appearance for calculations of the amount of change in coefficient $\Delta a$ and save power for calculation processing.

Furthermore, linear approximation section 205 performs linear approximation to a value stored in maximum value storage section 204. By this linear approximation, an insufficiently suppressed state and excessively suppressed state are calculated as an inclination component (that is, inclination y) of a linear function. One example of the method of linear approximation is a method of least squares, but the method is not limited to this.

Thus, according to this embodiment, an insufficiently suppressed state and excessively suppressed state are subjected to linear approximation, and therefore it is possible to efficiently derive appropriate clipping coefficient a from results of the linear approximation (inclination y).

The transmission data to be processed may be a simple symbol string or a code division multiple access (CDMA) signal.

(Embodiment 3)

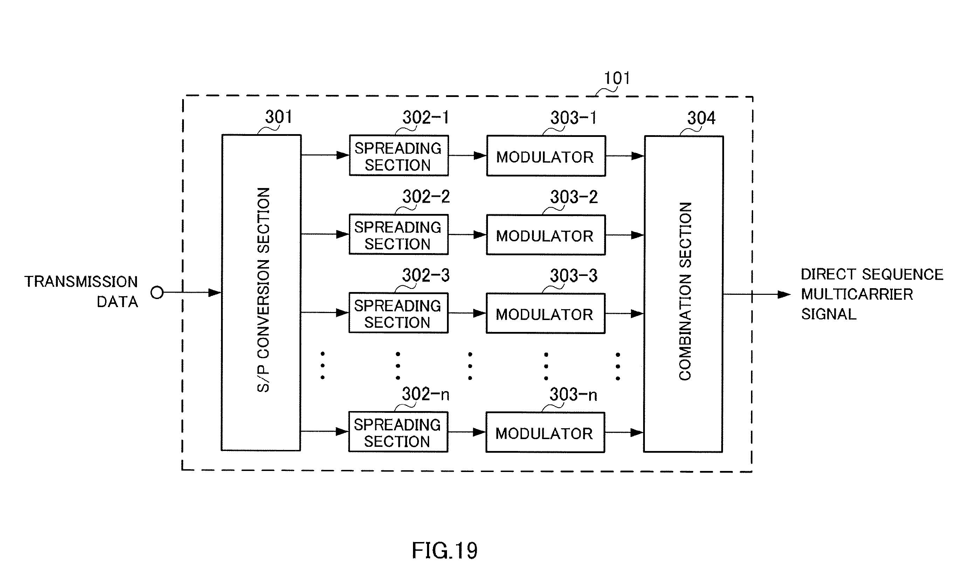

FIG. 19 is a block diagram showing the configuration of a modulation section of a radio transmission apparatus according to Embodiment 3 of the present invention. The radio transmission apparatus according to this embodiment has the same basic configuration as the radio transmission apparatus in FIG. 5 explained in Embodiment 1 . Therefore, the same components as or components corresponding to those explained in FIG. 5 are assigned the same reference numerals without further explanations.

Modulation section 101 in FIG. 19 is provided with S/P conversion section 301 that converts transmission data which is serial data to one or more (assumed to be n in this embodiment) parallel data, spreading sections 302-1, 302-2, 302-3, ..., 302-n that perform spreading processing on individual parallel data in the transmission data, modulators 303-1, 303-2, 303-3, ..., 303-n that perform modulation processing on the spreading processing results by the respective spreading sections 302-1 to 302-n and combination section 304 that combines the modulation results from respective modulators 303-1 to 303-n.

In modulation section 101 having the above-described configuration, transmission data converted to parallel data are spread by spreading sections 302-1 to 302-n and signal bandwidths of the respective parallel data are thereby broadened. Respective modulators 303-1 to 303-n modulate signals having different frequencies with the outputs of respective spreading sections 302-1 to 302-n. Combination section 304 combines the modulation results and outputs the combined signal to clipping section 102 as a direct sequence multicarrier signal.

Thus, according to this embodiment, when a direct sequence multicarrier signal having a large peak factor is transmitted by radio, it is possible to easily realize a desired peak factor.

Furthermore, transmission data to be processed may be a simple symbol string or code division multiple access (CDMA) signal.

(Embodiment 4)

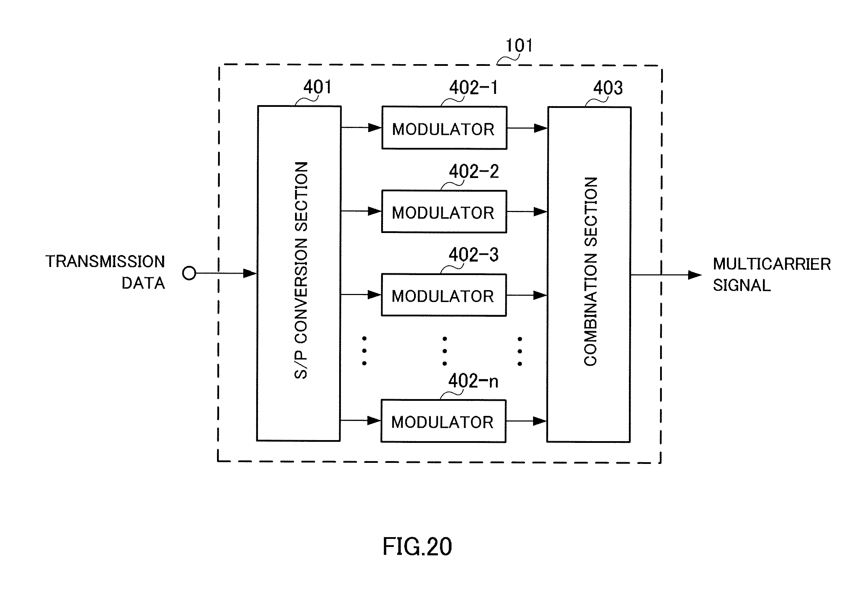

FIG. 20 is a block diagram showing the configuration of a modulation section of radio transmission apparatus according to Embodiment 4 of the present invention. The radio transmission apparatus in this embodiment has the same basic configuration as that of the radio transmission apparatus in FIG. 5 explained in Embodiment 1. Therefore, the same components as or components corresponding to those explained in Embodiment 1 are assigned the same reference numerals without further explanations.

Modulation section 101 in FIG. 20 is provided with S/P conversion section 401 that converts transmission data which is serial data to one or more (assumed to be n in this embodiment) parallel data, modulators 402-1, 402-2, 402-3, ..., 402-n that perform modulation processing on individual parallel data of the transmission data and combination section 403 that combines the modulation results from respective modulators 402-1 to 402-n.

In modulation section 101 having the above-described configuration, respective modulators 402-1 to 402-n modulate signals having different frequencies with the individual parallel data of the transmission data. Combination section 403 combines the modulation results and outputs the combined signal to clipping section 102 as a multicarrier signal.

Thus, according to this embodiment, when a multicarrier signal having a large peak factor is transmitted by radio, it is possible to easily realize a desired peak factor.

The transmission data to be processed may be a simple symbol string or a code division multiple access (CDMA) signal.

(Embodiment 5)

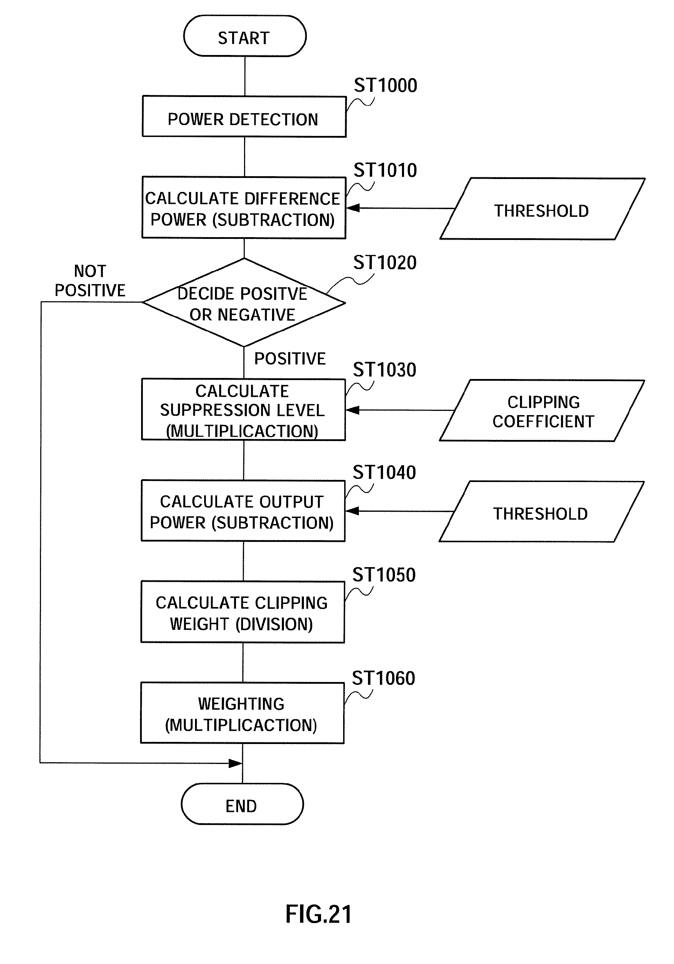

FIG. 21 is a flow chart illustrating a clipping processing operation of a radio transmission apparatus according to Embodiment 5 of the present invention. The radio transmission apparatus according to this embodiment has the same basic configuration as the radio transmission apparatus explained in Embodiment 1. Therefore, detailed explanations of the respective components will be omitted.

In step ST1000, instantaneous input power P of one sample of a modulation signal (processing sample) is detected. This modulation signal is a time discrete (digital) modulation signal.

In step ST1010, using threshold Pth, difference P-Pth between detected instantaneous input power P and threshold Pth is calculated. In step ST1020, it is decided whether difference P-Pth is positive or negative. When difference P-Pth is not positive, the processing flow on this sample ends. On the other hand, when difference P-Pth is positive, the process moves to step ST1030.

In step ST1030, using calculated clipping coefficient a, the product of difference P-Pth and clipping coef f icient a is calculated. In this way, amount of power correction $\Delta p$ which is a suppression level is calculated. In step ST1040, correction power P' which is the output power from clipping section 102 is calculated using threshold Pth by subtracting amount of power correction $\Delta p$ from threshold Pth.

In step ST1050, a clipping weight is acquired by calculating the ratio of correction power P' to instantaneous input power P. Next, in step ST1060, the instantaneous power of the original modulation signal is converted to P' by multiplying the processing sample by the acquired clipping weight.

Clipping coefficient a is adaptively obtained in the form of a linear function according to, for example, the method explained in the above-described embodiment so that the input/output power characteristic corresponding to the combination of clipping section 102 and filter section 103 becomes an intended peak factor.

Thus, according to this embodiment, by performing clipping based on optimum clipping coefficient a which is adaptively obtained in the form of a linear function, it is possible to easily realize a desired peak factor when a modulation signal having a large peak factor is transmitted by radio.

The present application is based on Japanese Patent Application No. 2004-082906 filed on March 22, 2004, the entire content of which is expressly incorporated by reference herein.

Industrial Applicability

The peak power suppressing apparatus and peak power suppressing method of the present invention have an effect of easily realizing a desired peak factor without increasing the scale of the apparatus and reducing the utilization efficiency of the storage area and is suitable for use in suppression of peak power of a multicarrier signal, for example.

**Claims**

1. A peak power suppressing apparatus comprising:

   a suppression section that suppresses peak power of a transmission signal based on a predetermined suppression coefficient;
   a limiting section that limits a band of the transmission signal in which peak power has been suppressed by said suppression section;
   a detection section that detects input power of the transmission signal inputted to said suppression section and output power of the transmission signal outputted from said limiting section respectively;
   a calculation section that calculates an amount of change of the suppression coefficient based on the detected input power and output power; and
   a change section that changes the suppression coefficient based on the calculated amount of change.

2. The peak power suppressing apparatus according to claim 1, wherein said calculation section comprises a state value calculation section that calculates a numerical value indicating at least any one of an insufficient state and excessive state of peak power suppression by said suppression section based on the detected input power and output power, and calculates the amount of change of the suppression coefficient based on the calculated numerical value.

3. The peak power suppressing apparatus according to claim 2, wherein said state value calculation section calculates the numerical value by carrying out predetermined linear approximation on the detected input power and output power.

4. The peak power suppressing apparatus according to claim 2, wherein:

   said calculation section comprises a decision section that decides whether or not the detected input power is within a predetermined range; and
   said state value calculation section calculates the numerical value based on input power within the range and output power corresponding to the input power out of the detected input power and output power.

**5.** The peak power suppressing apparatus according to claim 1, wherein said change section comprises an update section that updates the suppression coefficient based on the calculated amount of change.

**6.** The peak power suppressing apparatus according to claim 1, further comprising a modulation section that has a variable input/output power characteristic,
wherein said change section comprises a storage section that stores suppression coefficients corresponding to the input/output power characteristic as a coefficient table, and, when the input/output power characteristic of said modulation section is switched, changes the suppression coefficient based on the coefficient table stored in said storage section.

**7.** The peak power suppressing apparatus according to claim 1, wherein:

said limiting section has a variable input/output power characteristic, and
said change section comprises a storage section that stores suppression coefficients corresponding to the input/output power characteristic as a coefficient table, and, when the input/output power characteristic of said limiting section is switched, changes the suppression coefficient based on the coefficient table stored in said storage section.

**8.** The peak power suppressing apparatus according to claim 1, wherein said change section comprises a reception section that receives a stop signal indicating stop of calculation of the amount of change, and stops calculating the amount of change when the stop signal is received.

**9.** The peak power suppressing apparatus according to claim 1, further comprising:

a stability detection section that detects that the calculated amount of change is stable at a lower level than a predetermined level; and
a transmission section that, when the calculated amount of change is detected to be stable, transmits the stop signal to said reception section.

**10.** A radio transmission apparatus comprising the peak power suppressing apparatus according to claim 1.

**11.** A peak power suppressing method comprising:

a suppression step of suppressing peak power of a transmission signal based on a predetermined suppression coefficient;
a limiting step of limiting a band of the transmission signal the peak power of which has been suppressed in said suppression step;
a detection step of detecting input power of the transmission signal before the peak power is suppressed in said suppression step and output power of the transmission signal after the band is limited in said limiting step respectively;
a calculation step of calculating the amount of change of the suppression coefficient based on the input power and output power detected in said detection step; and
a changing step of changing the suppression coefficient based on the amount of change calculated in said calculation step.

EP 1 717 979 A1

| MODULATION SECTION | → | CLIPPING SECTION | → | FILTER SECTION |
|---|---|---|---|---|

11    12    13

| D/A CONVERSION SECTION | → | FREQUENCY CONVERSION SECTION | → | TRANSMISSION AMPLIFICATION SECTION |
|---|---|---|---|---|

14    15    16    17

PRIOR ART

FIG.1

PRIOR ART
FIG.2

PRIOR ART
FIG.3

PRIOR ART

FIG.4

EP 1 717 979 A1

TRANSMISSION DATA

MODULATION SECTION 101

CLIPPING SECTION 102

FILTER SECTION 103

D/A CONVERSION SECTION 104

FREQUENCY CONVERSION SECTION 105

TRANSMISSION AMPLIFICATION SECTION 106

107

COEFFICIENT SETTING SECTION 108

SYSTEM SWITCHING SECTION 109

COEFFICIENT CORRECTION CONTROL SECTION 110

STOP INSTRUCTION SIGNAL

COEFFICIENT CORRECTION SIGNAL GENERATION SECTION 111

100

FIG.5

EP 1 717 979 A1

FIG.6

FIG.7

OFDM SIGNAL (BEFORE CLIPPING)

OFDM SIGNAL (AFTER CLIPPING)

102

131 POWER DETECTION SECTION

132 THRESHOLD STORAGE SECTION

133 FIRST SUB-TRACTOR

134 FIRST MULTI-PLIER

135 SECOND SUB-TRACTOR

136 SELECTOR

137 DIVIDER

138 SECOND MULTIPLIER

CLIPPING COEFFICIENT

FIG.8

FIG.9

EP 1 717 979 A1

108

SYSTEM
SWITCHING
SIGNAL ○→

181

CLIPPING
COEFFICIENT TABLE
STORAGE SECTION

182

CLIPPING
COEFFICIENT
CORRECTION
SIGNAL ○→

ADDER

183

SELECTOR

184

CLIPPING
COEFFICIENT
STORAGE SECTION

→○ CLIPPING
COEFFICIENT

FIG.10

FIG.11A

FIG.11B

Pth

Pth

INPUT

FIG.12A

Pth

Pth

INPUT

FIG.12B

## FIG.13

## FIG.14

FIG.15

FIG.16

FIG.17

FIG.18

FIG.19

FIG.20

EP 1 717 979 A1

START

POWER DETECTION — ST1000

CALCULATE DIFFERENCE POWER (SUBTRACTION) — ST1010 ← THRESHOLD

DECIDE POSITVE OR NEGATIVE — ST1020

NOT POSITIVE

POSITIVE

CALCULATE SUPPRESSION LEVEL (MULTIPLICACTION) — ST1030 ← CLIPPING COEFFICIENT

CALCULATE OUTPUT POWER (SUBTRACTION) — ST1040 ← THRESHOLD

CALCULATE CLIPPING WEIGHT (DIVISION) — ST1050

WEIGHTING (MULTIPLICACTION) — ST1060

END

FIG.21

## INTERNATIONAL SEARCH REPORT

| International application No. |
| --- |
| PCT/JP2005/004669 |

A. CLASSIFICATION OF SUBJECT MATTER
    Int.Cl⁷ H04J11/00, 1/00

According to International Patent Classification (IPC) or to both national classification and IPC

B. FIELDS SEARCHED

Minimum documentation searched (classification system followed by classification symbols)
    Int.Cl⁷ H04J11/00, 1/00

Documentation searched other than minimum documentation to the extent that such documents are included in the fields searched
    Jitsuyo Shinan Koho          1922-1996   Jitsuyo Shinan Toroku Koho   1996-2005
    Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-115123 A  (Nippon Telegraph And Telephone Corp.), 12 April, 2000 (12.04.00), Fig. 6 (Family: none) | 1-12 |
| A | JP 2003-298549 A  (Mitsubishi Electric Corp.), 17 October, 2003 (17.10.03), Par. Nos. [0059] to [0064] (Family: none) | 1-12 |
| A | JP 11-074862 A  (Nippon Telegraph And Telephone Corp.), 16 March, 1999 (16.03.99), Fig. 1 & JP 3046786 B2 | 1-12 |

☐ Further documents are listed in the continuation of Box C.        ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 09 June, 2005 (09.06.05) | 28 June, 2005 (28.06.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

# EP 1 717 979 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003298549 A

- JP 2004082906 A

**Non-patent literature cited in the description**

- **LI ; XIAODONG.** Effects of clipping and filtering on the performance of OFDM. *IEEE Communications Letters,* May 1998, vol. 2 (5), 131-133